# NEUE EUROPÄISCHE PATENTSCHRIFT

(11) **EP 0 169 189 B2**
(45) Veröffentlichungstag und Bekanntmachung des Hinweises auf die Entscheidung über den Einspruch: **04.08.1993**
(45) Hinweis auf die Patenterteilung: 23.05.1990
(21) Anmeldenummer: 85890150.7
(22) Anmeldetag: 05.07.1985
(51) Int. Cl.: G01B 5/00

(54) **Lineares Messsystem**
Linear measuring system
Système de mesure linéaire

(30) Priorität: 18.07.1984 AT 2317/84
(43) Veröffentlichungstag der Anmeldung: 22.01.1986
(73) Patentinhaber: RSF-Elektronik Gesellschaft m.b.H., A-5121 Tarsdorf 93 (AT)
(72) Erfinder: Rieder, Heinz, A-5120 St. Pantaleon (AT); Schwaiger, Max, A-5121 Ostermiething (AT)
(74) Vertreter: Hübscher, Gerhard, Dipl.-Ing.

(56) Entgegenhaltungen:
- EP-A- 0 105 119
- EP-A- 0 114 251
- DE-A- 2 016 253
- DE-A- 2 712 421
- US-A- 4 117 439

## Beschreibung

Die Erfindung betrifft ein lineares Meßsystem nach dem Oberbegriff des Patentanspruches 1.

Ein derartiges Meßsystem istausderEP-A-0 105 119 bekannt.

Allgemein kann bei derartigen Meßsystemen der Maßstab entweder in Form einer meist mehrspurigen codierten Spur für absolute Meßsysteme oder in Form einer Inkrementalteilung für inkrementale Meßsysteme vorgesehen sein, wobei neben der Inkrementalteilung ein oder mehrere Spuren für Referenzmarken angebracht werden können. Die Abtastung der jeweiligen Maßstabverkörperung über die Abtasteinheit erfolgt nach optoelektronischen, induktiven, magnetischen oder kapazitiven Abtastprinzipien. In allen Fällen werden elektrische Abtastsignale erhalten, die meist nach Umformung in Digitalsignale, weiterverarbeitet und für die Meßanzeige bzw. in einer Maschinensteuerung ausgenützt werden. Der Hohlprofilbalken wird im Normalfall an einer Werkzeugmaschine oder in einem Industrieroboter befestigt und die Abstateinheitwird mit einem bewegbaren Teil, dessen Lageveränderung zu messen ist, verbunden oder umgekehrt. Dabei wird meist ein an der Unterseite geschlitzter Hohlprofil-Balken verwendet, in dem die Abtasteinheit der Länge nach verstellbar ist, wobei für die Verstellung der Abtasteinheit ein zwischen den Spalt abdichtenden Dichtlippen herausgeführtes Schwert dient.

Nach der EP-A-0 105 119 nimmt der Hohlprofil- Balken als rohrförmiger Längstragereine Trägerfunktion wahr und trägt die Abtasteinheit. Die auf das eine Ende wirkende Federanordnung stützt sich an einem unmittelbar auf das Ende des Hohlprofil-Balkens aufgesetzten Tragstück ab und für das herausgeführte Ende des Bandes dient ein über Spannschrauben ebenfalls am Hohlprofil-Balken abgestütztes Spannstück. Die Abtasteinheit besitzt eine an der Unterseite des Bandes angreifende Führungsplatte, die mit einer Nut zur Aufnahme des Bandes versehen ist und somit das Band gegenüber der Abtasteinheit führt. Ferner ist die Abtasteinheit mit seitlich vorstehenden Führungsstücken in seitlichen Längsnuten des Hohlprofil-Balkens geführt, so daß die Abtasteinheit, die mit einem Mitnehmer über ein nachgiebiges Zwischenstück verbunden ist, bei der Abtastung des Maßstabes jeweils genau dem Verlauf des Hohlprofil-Balkens folgt und auch das Band entsprechend diesem Verlauf einstellt.

Aus der US-A-4 117 439 ist ein für induktive Abtastung bestimmtes Meßsystem bekannt, bei dem ein die Maßstabwindungen tragendes Band zwischen zwei am Maschinenkörper befestigbaren Halteböcken gespannt ist und unter starrer Einspannung durch Festklemmung der Bandenden unter einer Vorspannung gehalten werden kann, die sich allerdings bei relativ unterschiedlichen Wärmedehnungen von Band und Maschinenkörper ändert. Die eine Spule aufweisende Abtasteinheit ist mit Führungselementen für das Band versehen, die eine an der von der Spule abweisenden Seite gegen das Band durch Federn angedrückte Führungsplatte und Randhalter für das Band umfassen, gegen die das Band durch die Federn gedrückt wird. Das Band mit der Abtasteinheit kann nach unten hin durch eine Schutzplatte abgedeckt werden, die entweder am Maschinengehäuse oder an den Halteböcken für das Band befestigt wird. Bei Ausbildung der Schutzplatte als Winkel profil kann sie durch weitere angesetzte Profile zu einem einseitig offenen Gehäuse ergänzt werden, wobei die Abtasteinheit an einem durch die Gehäuseöffnung einragenden Arm gehalten wird.

Bei einem Meßsystem nach der US-A-38 16 002 sind die Enden des hier wieder eine Trägerfunktion erfüllenden Hohlprofil-Balkens durch Deckel abgeschlossen, an denen die Enden des Maßstabes gehalten sind. Das eine Maßstabende wird mit Hilfe eines Spannbockes fest eingespannt. Das andere Maßstabende wird im Schlitz eines über eine Schraube der Länge nach verstellbaren Bolzens gehalten, wobei eine zusätzliche Feder vorgesehen ist, die das Bestreben hat, den Bolzen im Sinne einer Spannung des Maßstabbandes zu verstellen. Die Federvorspannung ist mittels der Schraube einstellbar. Dabei gibt es Konstruktionen, bei denen die Schraube im Inneren des Hohlprofil-Balkens untergebracht ist. Andere Konstruktionen verwenden eine oder mehrere von außen betätigbare Spannschrauben.

Die Hohlprofil-Balken werden wegen der leichten Herstellbarkeit fast ausschließlich aus Leichtmetall, insbesondere Aluminium hergestellt. Dieses besitzt gegenüber dem Material des Maschinenbettes, an dem der Hohlprofil-Balken befestigt wird, einen wesentlich größeren Ausdehnungskoeffizienten. Die Längenänderung des Hohlprofil-Balkens mit der Temperatur bewirkt Spannungsänderungen im Metallband und damit stärkere Längenänderungen als das Band aufgrund seines gegenüber Aluminium geringeren Ausdehnungskoeffizienten durch die Temperatur erleiden würde. Ein Stahlband hätte an sich etwa den gleichen Ausdehnungskoeffizienten wie das aus Stahl hergestellte Maschinenbett. Die durch die verschiedenen Wärmedehnungen und insbesondere die starke Wärmedehung des Hohlprofil-Balkens bedingten Spannungsänderungen können zu Abtast- und Meßfehlern führen. Dies gilt insbesondere für längere Meßsysteme.

Bei einer bekannten Konstruktion wird das Metallband in eine Nut des Hohlprofil-Balkens eingebettet und in dieser Nut durch eine elastisch nachgiebige Klebung oder sonstige Halterung befestigt. Bei dieser Ausführung ist zwar eine Spanneinrichtung vorgesehen, doch kann diese besonders beim längeren Band nur zum Teil und oft nicht über die ganze Bandlänge wirksam werden. Vor allem ergeben sich wegen der Haftung des Bandes an der Bettung über die Länge unterschiedliche Spannkräfte und dadurch unterschiedliche Dehnungen. Das Band folgt wegen der Bettung Unlinearitäten des Trägers. Die Abtasteinheit wird bei der beschriebenen Ausführung meist in Form eines Wägelchens ausgebildet, das auf dem wie erwähnt abgestützten Band geführt ist. Es können sich bei der Abtastung zwischen dem ablesenden Teil der Abtasteinheit und dem am Band vorgesehenen Maßstab Abstandsänderungen sowohl quer zur Bandhauptebene als auch Verschiebungen in der Bandebene, insbesondere zu den Seiten des Bandes hin, ergeben, was zu Signaländerungen und Meßfehlern führen kann. Die erwähnten Verlagerungen können überdies bei aufeinanderfolgenden Abtastvorgängen an der gleichen Maßstabstelle in unterschiedlicher Weise erfolgen, so daß auch allenfalls vorgesehene Korrektureinrichtungen, die die erwähnten Fehler durch gespeicherte Korrektursignale ausgleichen sollen, wenigstens zum Teil unwirksam werden.

Aufgabe der Erfindung ist die Schaffung eines linearen Meßsystemes der genannten Art, bei dem mit einfachen Mitteln eine Auswirkung der von Maschinenbett unterschiedlichen temperaturabhängigen Lageänderungen des Hohlprofil-Balkens auf die Abtastung ebenso vermieden werden, wie nachteilige Auswirkungen eines ungeraden Verlaufes des Hohlprofil-Balkens auf die Abtastung.

Die gestellte Ausgabe wird durch die Merkmale des Patentanspruches 1 gelöst.

Durch die im Nachhinein äußerst einfach erscheinende erfindungsgemäße Maßnahme, können sich, da der Hohlprofil-Balken keine entscheidende Trägerfunktion mehr hat und sich die die Enden des Bandes haltenden Elemente nicht an ihm abstützen, auch stärkere Längenänderungen dieses Hohlprofil-Balkens nicht mehr zu Änderungen der Längsspannungen auswirken. Da das Band frei gespannt ist, wirkt sich auch ein ungerader Verlauf des Hohlprofil-Balkens nicht aus. Das Band unterliegt in jedem Bereich seiner Länge der gleichen Zugspannung Bei der Abtastung ist die Relativlage von Abtasteinheit und Band quer zur Bandlängsrichtung, und zwar sowohl in der Bandebene als auch normal dazu festgelegt, so daß die Abtastegenauigkeit erhöht wird und gegenüber der bekannten Ausführung gleichmäßigere Signale erhalten werden. Die Bandenden sind leicht zugänglich und es ergibt sich eine einfache Spannvorrichtung.

Nach einer Weiterbildung ist das eine Bandende über einen Stelltrieb und das andere Bandende uber eine Feder am zugehörigen Spannstück gehalten.

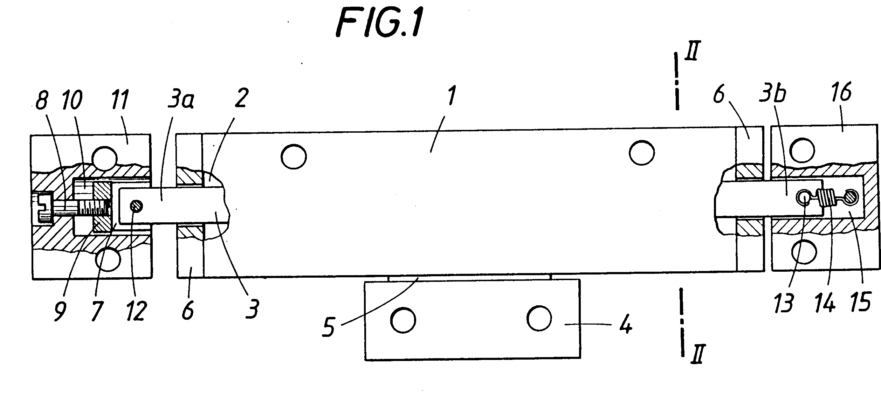

In der Zeichnung ist der Erfindungsgegenstand beispielsweise schematisiert dargestellt. Es zeigt
Fig. 1 ein Meßsystem teilweise in Ansicht und teilweise im Schnitt und
Fig. 2 einen Schnitt nach der Linie 11-11 der Fig. 1.

Für das Meßsystem ist ein über den Bereich der Meßlänge reichender Hohlprofil-Balken 1 vorgesehen, der in der Zeichnung verkürzt dargestellt wurde. In dem über einen unterseitigen Schlitz, der gegebenenfalls mit Dichtlippen versehen sein kann, zugänglichen Hohlraum 2 des Hohlprofil-Balkens ist ein eine Maßstabverkörperung tragendes Metallband 3 angeordnet, das über eine nur in ihren Umrissen dargestellt Abstasteinheit 17, die über einen mit einem Werkzeugschlitten betätigbaren Halter 4 und ein Schwert 5 verstellbar ist, zur Erzeugung von Meßsignalen abgetastet werden kann.

Die Enden 3a, 3b des Metallbandes 3 sind durch Schlitze in Enddecken 6 des rohrförmigen Längsträgers 1 herausgeführt. Das Bandende 3a greift in einen Schlitz eines über eine Schraube 8 verstellbaren Spannstückes 9 in einer Bohrung 10 eines Haltestückes 11 ein und ist im Schlitz 7 um eine Querachse 12 schwenkbar.

Am Bandende 3b greift an einem Querzapfen 13 eine Zugfeder 14 an die ihrerseits wieder in einer Bohrung 15 eines gesondert montierbaren Haltestückes 16 untergebracht ist.

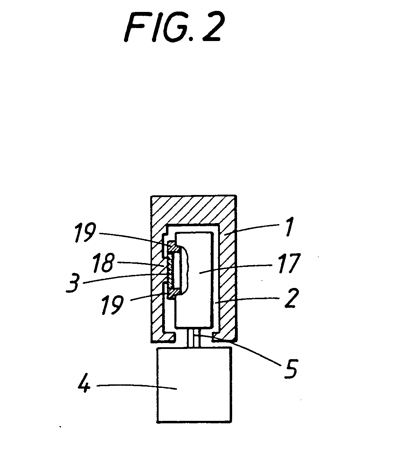

Wie insbesondere Fig. 2 zeigt, stützt sich das zwischen den Haltepunkten 12, 13 frei gespannte Maßstabband 3 mit seiner Unterseite frei aufliegend auf einem Steg 18 des Hohlprofil-Balkens 1 ab. Die Abtasteinheit 17 trägt Führungsleisten 19, beispielsweise Kunststoffgleiter, die eine Führung für die Seiten des Maßstabbandes 3 bilden. Weitere Gleiter können eine Abtastplatte oder einen sonstigen zur Abtastung dienenden Teil an der Maßstabseite des Bandes 3 führen.

## Patentansprüche

1. Lineares Meßsystem, bei dem in und parallel zu einem Hohlprofil-Balken (1) ein aus einem Metallband (3) bestehender Maßstab angeordnet ist, der über eine ebenfalls im Hohlprofil-Balken (1) angeordnete Abtasteinheit (17) abtastbar ist, bei dem das Band (3) an seinen Enden (3a, 3b) festgehalten und über eine auf das eine Ende (3b) wirkende Feder (14), deren Vorspannung einstellbar ist, gespannt ist, und das andere Ende (3a) aus dem Hohlprofilbalken (1) herausgeführt ist, bei dem das Band (3) innerhalb des Hohlprofilbalkens (1) frei gespannt ist und bei dem die Abtasteinheit (17) eine am Band (3) angreifende Führung aufweist, dadurch gekennzeichnet, daß das eine Bandende (3b) ebenfalls aus dem Hohlprofilbalken (1) herausgeführt ist, daß beide Bandenden (3a, 3b) an Spannstücken (11, 16) montiert sind, die durch einen Spalt vom Ende des Hohlprofil-Balkens getrennt sind und die unabhängig voneinander und unabhängig vom jeweiligen Balkenende montiert sind und daß sich das frei gespannte Band (3) innerhalb des Hohlprofil-Balkens (1) mit seiner Unterseite frei aufliegend auf einem mit dem Balken einstückig ausgeführten Steg (18) dieses Balkens abstützt, wobei die keine Führung am Hohlprofil-Balken aufweisende Abtasteinheit (17) mit ihrer Führung (19) für das Band (3) außerhalb dieses Steges (18) an den Seitenrändern des Bandes angreift.

2. Meßsystem nach Anspruch 1, dadurch gekennzeichnet, daß das eine Bandende (3a) über einen Stelltrieb (7, 8, 9) und das andere Bandende über die Feder (14) am zugehörigen Spannstück (11, 16) gehalten ist.

## Claims

1. Alinear measuring system, in which a scale member consisting of a metal strip (3) extends in and parallel to a tubular beam (1) and is adapted to be scanned by a scanning unit (17), which is also disposed in the tubular beam (1), wherein the strip (3) is fixed at its ends (3a, 3b) and is tensioned by a spring (14), which acts on the one end (3b) and has an adjustable initial stress, and the other end (3a) extends out of the tubular beam (1), the strip (3) is freely tensioned within the tubular beam (1) and the scanning unit (17) comprises a trackforthe strip (3), said trackengaging the strip (3), characterised in that the one end (3b) of the strip extends likewise out of the tubular beam (1), that both ends (3a, 3b) of the strip are mounted on tensioning members (11, 16), which are separated by a gap from the end of the tubular beam and are mounted independently of each other and independently of their respective ends of the beam and that the freely tensioned strip (3) within the tubular beam (1) is supported with its lower side resting unattached on a flange (18) of this beam, said flange being an integral part of the beam, whereby the scanning unit (17), which has no track on the tubular beam, engages, with its track (19) for the strip (3), on the outside of this flange (18) along the outside edges of the strip.

2. A measuring system according to claim 1, characterised in that the one end (3a) of the strip is held on its associated tensioning member (11,16) by an adjusting drive (7, 8, 9) and the other end of the strip held to its member by the spring (14).

## Revendications

1. Système de mesure linéaire comprenant une règle sous forme de bande métallique (3) disposée dans ou parallèlement à une barre (1) à profil creux et qui peut être balayé au moyen d'une unité de balayage disposée également dans la barre (1) à profil creux, la bande (3) étant retenue à ses extrémités (3a,3b) et étant tendue au moyen d'un ressort, dont la charge initiale peut être ajustée, agissant sur une extrémité (3b) et l'autre extrémité (3a) étant sortie de la barre (1) à profil creux, la bande (3) étant librement tendue à l'intérieur de la barre (1) à profil creux et l'unité de balayage (17) étant muni d'un guide contactant la bande (3), caractérisé en ce que l'une (3b) des extrémités de la bande est également sortie de la barre à profil creux (1 que les deux extrémités (3a,3b) de la bande sont montées à des pièces de tension (11,16) qui sont séparées au moyen d'une fente de l'extrémité de la barre à profil creux et qui sont montées de façon indépendante l'une de l'autre et de façon indépendante de l'extrémité respective de la barre et que la bande (3) librement tendue repose à l'intérieur de la barre (1) à profil creux librement avec son côté inférieur sur une saillie (18) de cette barre, dont elle est partie intégrante, l'unité de balayage (17), qui n'est pas guidée par la barre à profil creux contactant au moyen de son guide (19) pour la bande (3) les bords latéraux de la bande en dehors de la saillie.

2. Système de mesure selon la revendication 1, caractérisé en ce qu'une extrémité (3a) de la bande est retenue à l'aide d'un moyen d'ajustage (7,8,9) par la pièce de tension (11) et que l'autre extrémité (3b) de la bande est retenue au moyen du ressort (14) à l'autre pièce de tension (16).
